# FASCICULE DE BREVET EUROPEEN

(11) **EP 3 330 501 B1**
(45) Date de publication et mention de la délivrance du brevet: **30.12.2020**
(21) Numéro de dépôt: 17200260.2
(22) Date de dépôt: 07.11.2017
(51) Int. Cl.: F01M 1/16, F01M 11/06, F01M 11/00

(54) **PROCÉDÉ DE GESTION D'UN DISPOSITIF DE LUBRIFICATION D'UN MOTEUR**
VERFAHREN ZUR STEUERUNG EINER SCHMIERVORRICHTUNG EINES MOTORS
METHOD FOR MANAGING AN ENGINE LUBRICATION DEVICE

(30) Priorité: 01.12.2016 FR 1661817
(43) Date de publication de la demande: 06.06.2018
(73) Titulaire: RENAULT s.a.s., 92100 Boulogne-Billancourt (FR)
(72) Inventeur: MILLON, Jean-Pierre, 78870 Bailly (FR)

(56) Documents cités:
- EP-A1- 2 957 735
- FR-A1- 2 581 700
- FR-A1- 2 857 693
- US-A- 4 556 024
- US-A- 5 517 959
- US-A1- 2014 209 053

## Description

La présente invention a pour objet un procédé de gestion d'un dispositif de lubrification d'un moteur.

L'invention concerne aussi un groupe motopropulseur comprenant un tel procédé de gestion.

L'invention concerne également un véhicule automobile comprenant un tel groupe motopropulseur ou un tel procédé de gestion.

L'huile de lubrification permet de réduire les frottements internes d'un moteur. L'huile de lubrification doit être régulièrement renouvelée pour garantir des propriétés de lubrification suffisantes. Une solution pour augmenter la durée de vie de l'huile consiste à augmenter le volume d'huile disponible. L'augmentation du volume d'huile dans le carter d'huile crée un risque de surpression de l'huile pouvant causer la casse du moteur. On connait l'utilisation de moteurs dits à « carter sec » comprenant un deuxième réservoir d'huile annexe. L'huile redescendant dans le carter d'huile est pompée dans le réservoir annexe par une première pompe. Une deuxième pompe permet d'alimenter en huile les organes du moteur destinés à être lubrifiés depuis le réservoir annexe. Un tel système est couteux et volumineux puisqu'il requiert l'usage de deux pompes. De plus, un tel système ne permet pas de limiter la quantité d'huile en circulation dans le circuit d'huile. Le réchauffement de l'huile lors du démarrage du moteur est donc plus long.

On connait également du document FR2941010 un dispositif comprenant un deuxième réservoir situé dans la partie inférieure du carter du bloc moteur à proximité du carter d'huile et recueillant une partie de l'huile de recyclage du moteur. Ce dispositif présente l'inconvénient de devoir intégrer un deuxième réservoir en contrebas des organes moteurs et à proximité du carter d'huile. Le constructeur du moteur a peu de flexibilité pour positionner le deuxième réservoir. De plus, ce dispositif ne permet pas de réguler la quantité d'huile présente dans le carter d'huile et sa vidange est complexe.
La publication FR2581700-A1 décrit un dispositif permettant d'augmenter le volume d'huile du moteur grâce à un circuit de dérivation avec un deuxième réservoir d'huile avec un volume d'huile qui est ajouté à celui d'un premier réservoir d'huile de circuit principal, et alimenté par un débit prélevé sur le circuit principal de lubrification. Le circuit de dérivation est borné par une première vanne en amont et une seconde vanne en aval dudit circuit Le retour depuis ce deuxième réservoir vers le carter moteur s'effectue par l'intermédiaire d'un système comparateur du niveau qui détermine le besoin en huile du moteur. L'huile contenue dans le deuxième réservoir est utilisée en permanence pour la lubrification du moteur, tout comme l'huile du carter moteur. La première vanne permet de couper l'alimentation du circuit de dérivation en cas de non compensation de volume d'huile du premier réservoir par le second réservoir.Ledit dispositif ne comprend pas d'étape d'acquisition de caractéristiques fonctionnelles notamment de la pression d'huile qui doit être supérieure à un seuil de pression pour lubrifier de façon optimale les organes du moteur lorsque ce dernier est allumé.

Le but de l'invention est de fournir un procédé de gestion d'un dispositif de lubrification d'un moteur remédiant aux inconvénients ci-dessus.

En particulier, l'invention a pour objet de réaliser un procédé de gestion d'un dispositif de lubrification d'un moteur permettant notamment d'accélérer le réchauffement de l'huile lors des démarrages du moteur et de limiter les pertes de charge par barbotage. Le procédé de gestion selon l'invention permet également une vidange aisée du dispositif de lubrification. Cet objet est réalisé par le procédé de la revendication 1, le groupe motopropulseur de la revendication 9 met en oeuvre ce procédé.

L'invention se rapporte à un procédé de gestion d'un dispositif de lubrification d'un moteur comprenant un carter d'huile, un réservoir d'huile auxiliaire muni d'une électrovanne d'entrée et/ou d'une électrovanne de sortie et alimenté par un circuit d'huile haute pression, le procédé de gestion comprenant une étape d'acquisition d'au moins une caractéristique fonctionnelle du moteur, une étape de calcul d'au moins une consigne d'ouverture ou de fermeture d'au moins une électrovanne en fonction de l'au moins une caractéristique fonctionnelle du moteur et une étape d'actionnement de l'au moins une électrovanne en fonction de l'au moins une consigne.

L'étape d'acquisition peut comprendre une première sous-étape de détermination de grandeurs physiques du dispositif de lubrification, notamment le niveau d'huile dans le carter d'huile du moteur et/ou la température de l'huile et/ou la pression de l'huile dans le circuit d'huile haute pression et une deuxième sous-étape de détection de l'état du moteur, notamment la détection du démarrage ou de l'arrêt du moteur ou de l'arrêt automatique du moteur en situation de conduite.

L'étape de calcul peut comprendre une sous-étape de sélection de calculs comprenant une comparaison du niveau d'huile par rapport à un niveau de référence et/ou une comparaison de la température de l'huile par rapport à une température de référence et/ou une comparaison de la pression d'huile par rapport à une pression de référence et/ou une détection de l'état du moteur.

L'étape de calcul peut comprendre une sous-étape de gestion du démarrage du moteur comprenant les consignes suivantes :
- Lorsque le niveau d'huile dans le carter d'huile est strictement inférieur à un niveau de référence V1, une consigne de fermeture de l'électrovanne d'entrée et d'ouverture de l'électrovanne de sortie est établie ;
- Lorsque le niveau d'huile dans le carter d'huile est supérieur ou égal au niveau de référence V1, une consigne de fermeture de l'électrovanne d'entrée et de fermeture de l'électrovanne de sortie est établie.

L'étape de calcul peut comprendre une sous-étape de régulation du volume d'huile dans le carter d'huile comprenant les consignes suivantes :
- Lorsque le niveau d'huile dans le carter d'huile est strictement inférieur à un niveau de référence V2, une consigne de fermeture de l'électrovanne d'entrée et d'ouverture de l'électrovanne de sortie est établie ;
- Lorsque le niveau d'huile dans le carter d'huile est supérieur ou égal au niveau de référence V2, une consigne d'ouverture de l'électrovanne d'entrée et d'ouverture de l'électrovanne de sortie est établie.

L'étape de calcul peut comprendre une sous-étape de gestion des arrêts automatiques du moteur comprenant une consigne de fermeture de l'électrovanne d'entrée et de fermeture de l'électrovanne de sortie.

L'étape d'acquisition peut comprendre une détection d'une demande de maintenance, notamment une demande de vidange d'huile.

L'étape de calcul peut comprendre une sous-étape de gestion d'une opération de maintenance comprenant un arrêt du moteur destiné à permettre à un opérateur de remplacer l'huile de lubrification.

L'étape d'acquisition peut comprendre une sous étape de détermination du niveau d'huile dans le carter d'huile incluant une temporisation dont la durée est sensiblement égale au temps nécessaire pour que l'huile contenue dans le réservoir auxiliaire se vide dans le carter d'huile lorsque l'électrovanne d'entrée est non passante et l'électrovanne de sortie est passante.

La présente invention se rapporte également à un groupe motopropulseur pour véhicule automobile comprenant un dispositif de lubrification pour moteur muni d'un réservoir d'huile auxiliaire alimenté par un circuit d'huile haute pression et une unité de commande électronique qui met en œuvre le procédé de gestion du dispositif de lubrification tel que défini précédemment.

Enfin, la présente invention se rapporte également à un véhicule automobile comprenant un groupe motopropulseur tel que défini précédemment.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 est une vue schématique du mode de réalisation d'un groupe motopropulseur selon un mode de réalisation de l'invention.
La figure 2 est un logigramme représentant une première étape du procédé de gestion comprenant l'acquisition de caractéristiques d'état du moteur selon le mode de réalisation de l'invention.
La figure 3 est un logigramme représentant une première sous-étape de calcul du procédé de gestion selon le mode de réalisation de l'invention.
La figure 4 est un logigramme représentant une deuxième sous-étape de calcul du procédé de gestion selon le mode de réalisation de l'invention.
La figure 5 est un logigramme représentant une troisième sous-étape de calcul du procédé de gestion selon le mode de réalisation de l'invention.
La figure 6 est un logigramme représentant une quatrième sous-étape de calcul du procédé de gestion selon le mode de réalisation de l'invention.
La figure 7 est un logigramme représentant une cinquième sous-étape de calcul du procédé de gestion selon le mode de réalisation de l'invention.

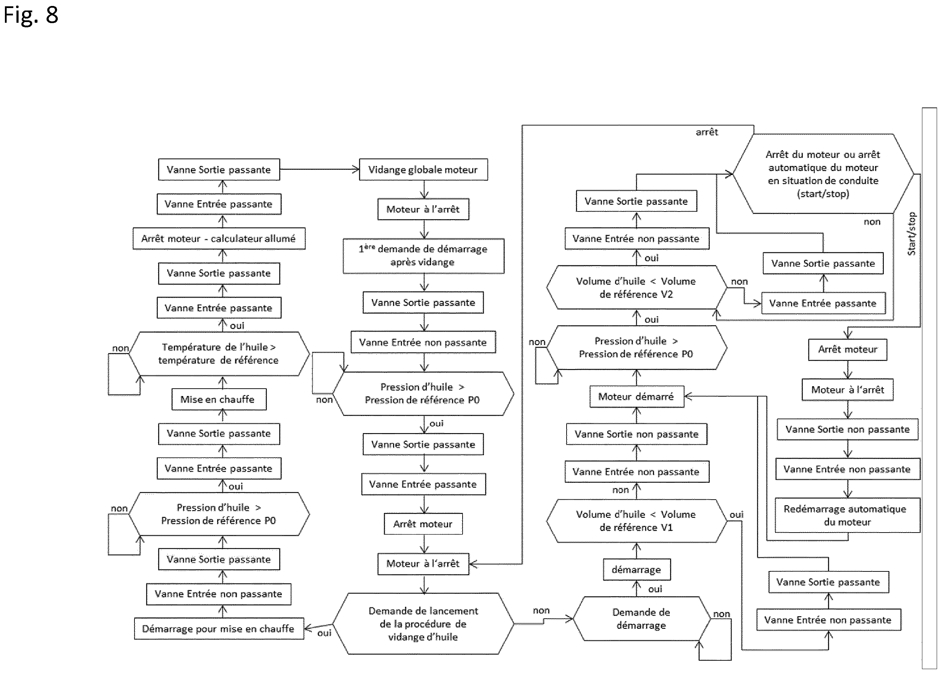

La figure 8 est un logigramme représentant une étape de calcul du procédé de gestion selon le mode de réalisation de l'invention.

Sur l'ensemble des figures on désigne, par commodité, une électrovanne par son abréviation « EV ».

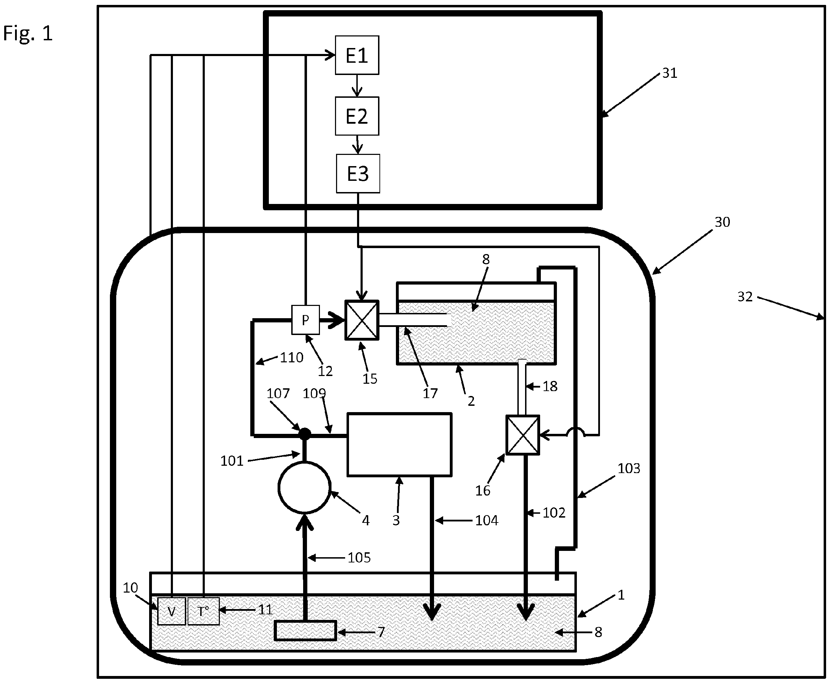

La figure 1 illustre schématiquement un groupe motopropulseur 32 selon l'invention. Le groupe motopropulseur 32 selon l'invention peut être utilisé pour toutes les applications de moteurs équipés d'un système de lubrification sous pression. En particulier, le groupe motopropulseur 32 peut être utilisé pour des véhicules automobiles, des poids lourds, des bateaux ou des motos. Selon le mode de réalisation présenté sur la figure 1, le groupe motopropulseur 32 selon l'invention est un moteur à combustion pour véhicule automobile.

Le groupe motopropulseur 32 comprend un moteur muni d'un dispositif de lubrification 30 et une unité de commande électronique 31.

Le dispositif de lubrification 30 comprend un carter d'huile 1, un réservoir auxiliaire 2 et un circuit d'huile haute pression 101 destiné à lubrifier des organes moteurs 3. Le réservoir auxiliaire 2 est distinct du carter d'huile 1. Le carter d'huile 1 est disposé dans la partie inférieure du moteur. Le carter d'huile 1 recueille l'huile 8 descendant dans le moteur par gravité au travers de conduites de recyclage 104. Une pompe à huile 4 aspire l'huile présente dans le carter d'huile 1 au travers d'une conduite d'alimentation 105 plongée dans le carter d'huile 1. La conduite d'alimentation 105 est connectée à la pompe à huile 4 à son extrémité supérieure et à une crépine 7 immergée dans l'huile présente dans le carter d'huile 1 à son extrémité inférieure.

Le dispositif de lubrification comprend un circuit d'huile haute pression 101. L'huile est mise sous pression dans le circuit d'huile haute pression 101 par la pompe à huile 4. En fonction des conditions de fonctionnement du moteur 23, la pression relative dans le circuit haute pression 101 peut varier entre 0,1 et 20 Bar. Le circuit d'huile haute pression 101 alimente les organes moteurs 3 destinés à être lubrifiés et le réservoir auxiliaire 2.

Dans le cas d'un moteur à combustion, les organes moteurs 3 destinés à être lubrifiés peuvent être notamment le vilebrequin, les bielles, les pistons ou les arbres à cames. Le circuit d'huile haute pression 101 comprend une dérivation 107. La pompe à huile 4 est en amont de la dérivation 107. Le circuit d'huile haute pression 101 se divise en deux branches 109, 110 en aval de la dérivation 107. La première branche 109 dessert les différents organes du moteur 3 destinés à être lubrifiés. La deuxième branche 110 dessert le réservoir auxiliaire 2.

Selon le mode de réalisation présenté en figure 1, une conduite de raccordement 102 connecte le réservoir auxiliaire 2 au carter d'huile 1. La conduite de raccordement 102 comprend une première embouchure à l'intérieur du réservoir auxiliaire 2 et une deuxième embouchure à l'intérieur du carter d'huile 1. La hauteur de la première embouchure est supérieure à la hauteur de la deuxième embouchure de manière a ce que l'huile contenue dans le réservoir auxiliaire 2 coule par gravité vers le carter d'huile 1. La première embouchure est positionnée au point le plus bas du réservoir auxiliaire 2 de manière à ce que la totalité de l'huile contenue dans le réservoir auxiliaire 2 puisse s'écouler par gravité à travers la première embouchure.

Le carter d'huile 1 comprend un capteur de niveau d'huile 10 et un capteur de température d'huile 11. Le circuit d'huile haute pression 101 comprend un capteur de pression d'huile 12. Ces capteurs sont connectés à l'unité de commande électronique 31.

Le réservoir auxiliaire 2 comprend un ajutage d'entrée 17 connecté au circuit d'huile haute pression 101. L'huile sous pression entre dans le réservoir auxiliaire 2 en passant à travers l'ajutage d'entrée 17. Le débit d'huile à l'entrée du réservoir auxiliaire 2 dépend principalement de la différence entre la pression d'huile dans le circuit haute pression 101 et la pression d'huile dans le réservoir auxiliaire 2, de la section de l'ajutage d'entrée 17 et de la longueur de l'ajutage d'entrée 17. Le réservoir auxiliaire 2 comprend un ajutage de sortie 18 connecté à la conduite de raccordement 102. L'huile contenue dans le réservoir auxiliaire 2 sort du réservoir auxiliaire 2 en passant à travers l'ajutage de sortie 18. Le débit d'huile à la sortie du réservoir auxiliaire 2 dépend principalement de la différence entre la pression d'huile dans le réservoir auxiliaire 2 et la pression d'huile dans la conduite de raccordement 102, de la section de l'ajutage de sortie 18 et de la longueur de l'ajutage de sortie 18. La section de l'ajutage d'entrée 17 est plus grande que la section de l'ajutage de sortie 18. La perte de charge de l'ajutage d'entrée 17 est inférieure à la perte de charge l'ajutage de sortie 18. Ainsi même si la pression d'huile dans le circuit haute pression 101 n'est que légèrement supérieure à la pression d'huile dans la conduite de raccordement 102, le réservoir auxiliaire 2 se remplit.

Le réservoir auxiliaire 2 comprend en amont de l'ajutage d'entrée 17, une électrovanne d'entrée 15. L'électrovanne d'entrée 15 permet de réguler l'entrée d'huile dans le réservoir auxiliaire 2. L'électrovanne d'entrée 15 est connectée à l'unité de commande électronique 31.

Le réservoir auxiliaire 2 comprend en aval de l'ajutage de sortie 18, une électrovanne de sortie 16. L'électrovanne de sortie 16 permet de réguler la sortie d'huile du réservoir auxiliaire 2. L'électrovanne de sortie 16 est connectée à l'unité de commande électronique 31.

Le réservoir auxiliaire 2 comprend un évent 14 connecté au carter d'huile 1 par une conduite d'aération 103. L'évent 14 (ou son entrée si elle est délocalisée) est positionné au dessus du niveau d'huile dans le réservoir auxiliaire 2. La conduite d'aération 103 débouche dans le carter d'huile 1 au dessus du niveau d'huile. La conduite d'aération 103 constitue une conduite d'air ou de gaz entre le réservoir auxiliaire 2 et la carter d'huile 1. Ainsi la pression des gaz dans le réservoir auxiliaire 2 est sensiblement égale à la pression des gaz dans le carter d'huile 1. L'écoulement de l'huile du réservoir auxiliaire 2 vers le carter d'huile 1 par la conduite de raccordement 102 ne peut être entravé par un écart de pression des gaz entre le réservoir auxiliaire 2 et le carter d'huile 1.

Selon le mode de réalisation décrit, le réservoir auxiliaire 2 d'huile est positionné sur une branche haute pression du circuit de lubrification, en amont d'une pompe à huile 4. Il est positionné en aval d'une dérivation permettant d'une part d'alimenter au moins un organe du moteur, et d'autre part de l'alimenter. En variante de réalisation, le réservoir auxiliaire 2 pourrait être disposé de manière différente sur le circuit haute pression du dispositif de lubrification. Il pourrait par exemple se trouver en aval d'au moins un organe à lubrifier du moteur. Ainsi, son positionnement au sein de l'architecture du moteur est très flexible.

En variante, le dispositif de lubrification 30 pourrait présenter une autre architecture. Notamment, le réservoir auxiliaire 2 pourrait être disposé à tout autre emplacement du dispositif de lubrification.

L'unité de commande électronique 31 est composée d'éléments matériels et/ou logiciels, qui se présente généralement sous la forme d'un calculateur embarqué. L'unité de commande électronique 31 reçoit des caractéristiques d'état du moteur parmi lesquelles des données des différents capteurs du dispositif de lubrification. Selon le mode de réalisation présenté, ces capteurs comprennent le capteur de température de l'huile 11, le capteur de niveau d'huile 10 et le capteur de pression 12 du circuit d'huile haute pression. A partir de ces données et/ou de modèles mémorisés, l'unité de commande électronique 31 met en met en œuvre un procédé de gestion du dispositif de lubrification 30 et notamment du réservoir d'huile auxiliaire 2. Pour cela, elle pilote notamment les électrovannes d'entrée 15 et de sortie 16 du réservoir auxiliaire 2. Le procédé est explicité par la suite.

Le procédé de gestion du dispositif de lubrification 30 comprend une étape d'acquisition E1 d'au moins une caractéristique fonctionnelle du moteur, une étape de calcul E2 d'une consigne d'ouverture ou de fermeture d'au moins une électrovanne en fonction de l'au moins une caractéristique fonctionnelle du moteur et une étape d'actionnement E3 de l'au moins une électrovanne en fonction de la consigne.

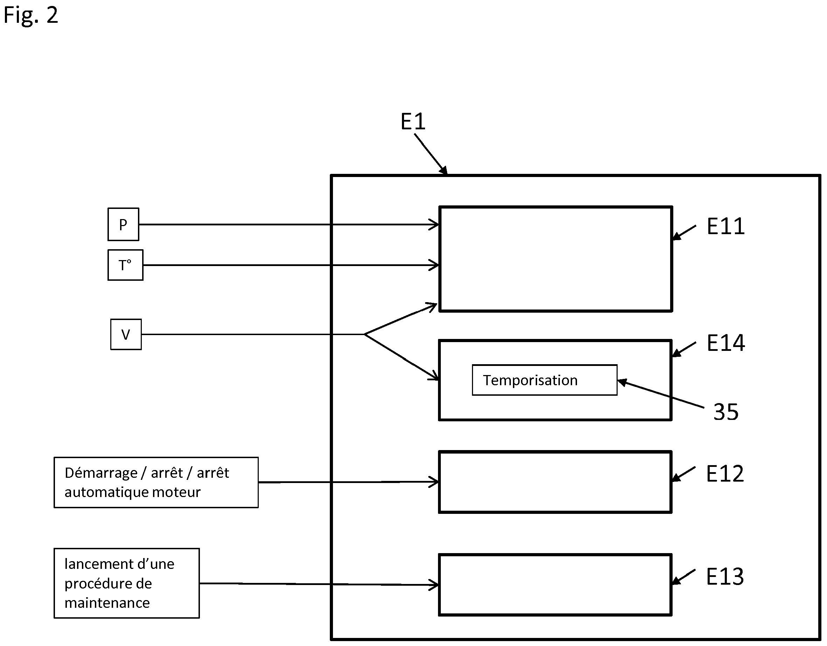

Selon le mode de réalisation de l'invention illustré à la figure 2, l'étape d'acquisition E1 de caractéristiques fonctionnelles du moteur comprend une première sous étape E11 de détermination de grandeurs physiques. Selon le mode de réalisation, ces grandeurs physiques sont le niveau d'huile dans le carter d'huile 1 du moteur, la température de l'huile et la pression de l'huile dans le circuit haute pression. La détermination de ces trois grandeurs physiques peut être obtenue avec des capteurs de niveau 10, de température 11 et de pression 12. Ces trois grandeurs physiques peuvent également être estimées indirectement grâce à des modèles physiques. Par exemple, ces modèles physiques calculent le niveau d'huile dans le carter d'huile, la température de l'huile et de la pression d'huile dans le circuit haute pression à partir d'autres grandeurs physiques dont dispose l'unité de commande électronique 31.

Selon le mode de réalisation décrit, l'étape d'acquisition E1 comprend une deuxième sous-étape E12 d'acquisition d'une donnée portant sur l'état du moteur. La donnée portant sur l'état du moteur peut prendre trois valeurs. Une première valeur correspond à un moteur allumé. Une deuxième valeur correspond à un moteur arrêté automatiquement en situation de conduite. Un tel arrêt du moteur est souvent dénommé selon le terme anglo-saxon « stop-start ». Une troisième valeur correspond à un arrêt du moteur ordinaire, c'est-à-dire un arrêt du moteur qui n'est pas un arrêt « stop-start ».

De plus, l'étape d'acquisition E1 peut comprendre l'acquisition d'autres caractéristiques d'état du moteur. Selon le mode de réalisation décrit, l'étape d'acquisition E1 comprend une troisième sous-étape E13 d'acquisition d'une donnée binaire portant sur une demande de lancement d'une procédure de maintenance.

L'étape d'acquisition E1 peut comprendre une sous-étape E14 de détermination du niveau d'huile dans le carter d'huile 1 incluant une temporisation 35. La durée de la temporisation 35 est sensiblement égale au temps nécessaire pour que l'huile contenue dans le réservoir auxiliaire 2 se vide dans le carter d'huile 1 lorsque l'électrovanne d'entrée est non passante et l'électrovanne de sortie est passante. La durée peut être une valeur fixe correspondant à la durée d'écoulement maximum. La durée d'écoulement de l'huile du réservoir auxiliaire 2 vers le carter d'huile 1 dépend de la quantité d'huile contenue dans le réservoir auxiliaire et de la viscosité de l'huile. La durée peut également être une valeur calculée à partir d'autres caractéristiques d'état du moteur telles que le niveau d'huile dans le carter d'huile et/ou la température de l'huile. La durée ainsi construite constitue une donnée pouvant être mise à disposition d'un dispositif de surveillance du niveau d'huile. Le dispositif de surveillance du niveau d'huile peut déterminer la quantité d'huile présente dans le dispositif de lubrification lorsque le moteur est arrêté, l'électrovanne d'entrée 15 est fermée et l'électrovanne de sortie 16 est ouverte depuis une durée supérieure ou égale à la durée calculée. Grâce à cette temporisation 35, le dispositif de surveillance ne génère aucune alerte de niveau d'huile trop bas dans le carter d'huile 1 alors que de l'huile est encore contenue dans le réservoir auxiliaire 2.

Les données acquises lors de l'étape d'acquisition E1 sont mises à disposition de l'étape de calcul E2. L'étape de calcul E2 détermine une ou plusieurs consignes d'actionnement des électrovannes. Selon le mode de réalisation de l'invention, l'étape de calcul E2 comprend cinq sous-étapes : une sous-étape de gestion du démarrage du moteur E21, une sous-étape de régulation du volume d'huile E22, une sous-étape de gestion des arrêts automatiques du moteur E23, une sous-étape de gestion d'une opération de maintenance E24 et une sous-étape de sélection de calculs E25.

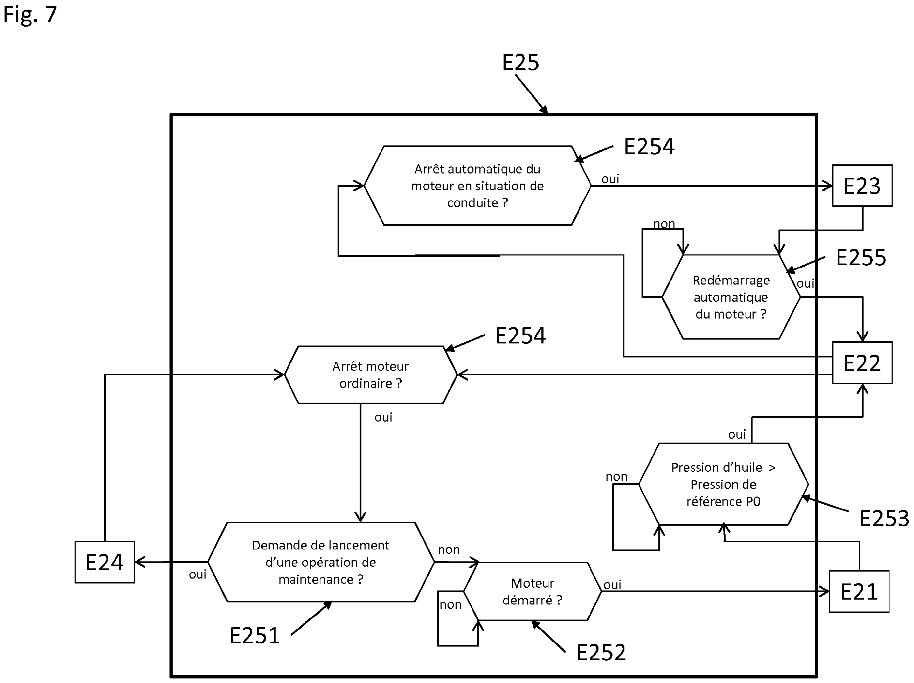

La figure 7 illustre le fonctionnement de la sous-étape de sélection de calculs E25. La sous-étape de sélection de calculs E25 pilote le lancement des sous-étapes E21, E22, E23, E24 en fonction des caractéristiques fonctionnelles du moteur. Elle comprend une première sous-étape d'initialisation E251. Lors de la sous-étape E251, l'unité de contrôle électronique contrôle la présence d'une demande de lancement d'une opération de maintenance. Si l'unité de commande électronique détecte une demande de lancement d'une opération de maintenance, alors elle active la sous-étape de gestion d'une opération de maintenance E24.

Si aucune demande de lancement d'une opération de maintenance n'est détectée, l'unité de commande électronique active une deuxième sous-étape de contrôle de l'état du moteur E252. Lors de la sous-étape de contrôle de l'état du moteur E252, si un démarrage du moteur est détecté, l'unité de commande électronique active la sous-étape de gestion du démarrage du moteur E21.

La sous-étape de sélection de calculs E25 comprend une troisième sous étape de gestion de la montée en pression du circuit haute pression E253. Cette sous-étape est activée parallèlement à la sous-étape de gestion du démarrage du moteur E21. Lors de cette étape l'unité de commande électronique compare la pression du circuit haute pression à une pression de référence P0. Si la pression du circuit haute pression est inférieure ou égale à la pression de référence P0, alors l'unité de commande électronique maintient l'activation de la sous-étape de gestion du démarrage du moteur E21. Si la pression du circuit haute pression est strictement supérieure à la pression de référence P0, alors l'unité de commande électronique active la sous-étape de régulation du volume d'huile E22.

La sous-étape de sélection de calculs E25 comprend une quatrième sous-étape de gestion des arrêts du moteur E254. Cette étape est activée parallèlement à la sous-étape de régulation du volume d'huile E22. Lors de cette étape, si l'unité de commande électronique détecte un arrêt « start-stop » du moteur alors elle active la sous-étape de gestion des arrêts automatiques du moteur E23. Si l'unité de commande électronique détecte un arrêt du moteur ordinaire, elle activera la sous-étape d'initialisation E251.

Enfin, la sous-étape de sélection de calculs E25 comprend une cinquième sous-étape de gestion du redémarrage automatique du moteur E255. Cette étape est activée parallèlement à la sous-étape de gestion des arrêts automatiques du moteur E23. Lors de cette sous-étape, si l'unité de commande électronique détecte un redémarrage automatique du moteur, alors elle active la sous-étape de régulation du volume d'huile E22.

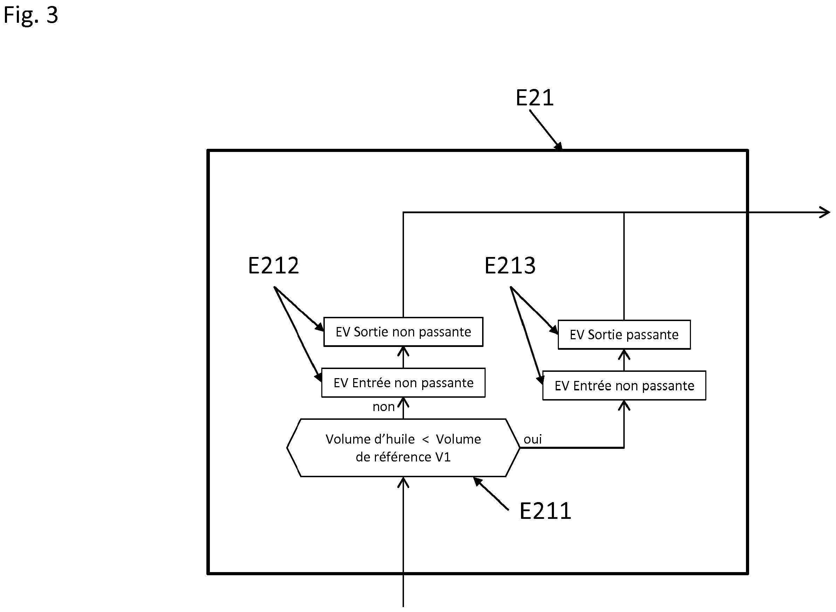

La figure 3 illustre le fonctionnement de la sous-étape de calcul de gestion du démarrage du moteur E21. Lorsqu'aucune demande de lancement d'une opération de maintenance n'est détectée et que le moteur est allumé, la première sous-étape de gestion du démarrage du moteur E21 est activée. La sous-étape de gestion du démarrage du moteur E21 comprend une première sous-étape de comparaison d'au moins une caractéristique fonctionnelle du moteur par rapport à une valeur de référence E211. Selon le mode de réalisation de l'invention, la sous-étape E211 est une comparaison du volume d'huile mesuré dans le carter d'huile 1 à un volume de référence V1. Si le volume mesuré est supérieur ou égal à V1 alors l'unité de commande électronique 31 établit une consigne de fermeture de l'électrovanne d'entrée 15 et de fermeture de l'électrovanne de sortie 16 E213. Si le volume mesuré est strictement inférieur à V1 alors l'unité de commande électronique 31 établit une consigne de fermeture de l'électrovanne d'entrée 15 et d'ouverture de l'électrovanne de sortie 16 E212. La consigne est appliquée tant que la pression mesurée dans le circuit d'huile haute pression est inférieure ou égale à une valeur de référence P0.

Ainsi, la fermeture de l'électrovanne d'entrée 15 accélère la mise sous pression du circuit haute pression 101 lors du démarrage du moteur. En effet, lorsque le moteur est à l'arrêt, la pompe à huile 4 ne fonctionne pas et la pression d'huile au niveau des organes du moteur 3 est nulle. Afin d'obtenir une lubrification optimale, la pression d'huile dans les organes du moteur 3 doit pouvoir être rétablie rapidement dès le redémarrage du moteur. La fermeture de l'électrovanne d'entrée 15 permet d'éviter qu'une partie de la pression générée par la pompe à huile 4 soit dissipée dans le réservoir auxiliaire 2. Ainsi, lors des phases de démarrage du moteur, la totalité de l'huile pompée par la pompe à huile 4 est dirigée vers les organes moteurs 3 à lubrifier.

Le volume V1 est déterminé de manière à ce que la crépine 7 soit suffisamment immergée dans l'huile présente dans le carter d'huile 1. Ainsi, selon les cas, l'ouverture de l'électrovanne de sortie 16 provoque l'augmentation du volume d'huile dans le carter d'huile 1. La crépine 7 est immergée dans l'huile et la pompe à huile 4 fonctionne correctement. La fermeture de l'électrovanne de sortie 16 permet de minimiser la quantité d'huile à réchauffer lorsque le volume d'huile présent dans le carter d'huile 1 est suffisant pour assurer l'immersion de la crépine 7. En effet, quand l'électrovanne de sortie 16 est fermée, le volume d'huile stocké dans le réservoir auxiliaire n'est pas en circulation dans le circuit de lubrification du moteur. Le dispositif de lubrification 30 fonctionne donc avec une quantité partielle de l'huile de lubrification. L'huile est progressivement réchauffée par le moteur. Une quantité partielle d'huile est plus rapidement réchauffée que la quantité totale. Ainsi la fermeture de l'électrovanne de sortie 16 permet d'accélérer le réchauffement de l'huile du moteur.

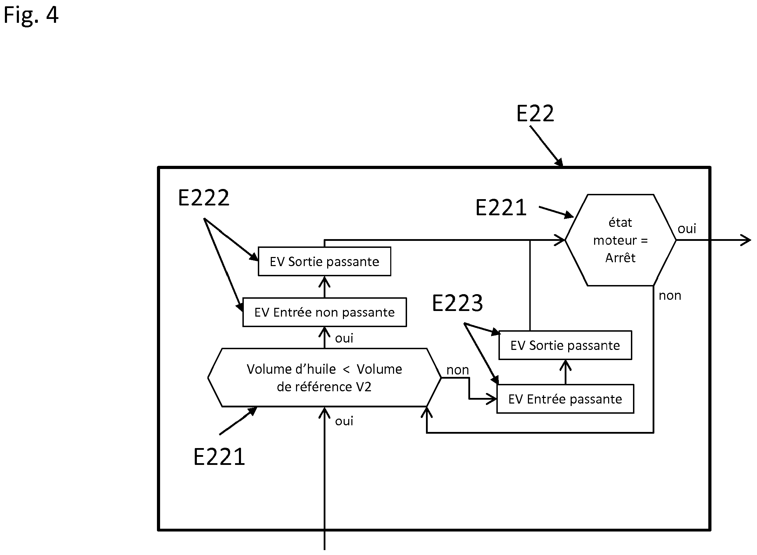

La figure 4 illustre le fonctionnement de la sous-étape de régulation du volume d'huile E22. En situation de conduite, lorsque le moteur est démarré et lorsque la pression d'huile est strictement supérieure à une pression de référence P0, la sous-étape de régulation du volume d'huile E22 de l'étape de calcul E2 est activée. La sous-étape E22 réalise une régulation du volume d'huile présent dans le carter d'huile 1. Elle comprend une première sous-étape de comparaison d'au moins une caractéristique fonctionnelle du moteur par rapport à une valeur de référence E221. Selon le mode de réalisation de l'invention, la sous-étape E221 comprend une comparaison du volume d'huile mesuré dans le carter d'huile 1 à un volume de référence V2 et la détection d'un arrêt du moteur. Si le volume d'huile mesuré est strictement inférieur à un volume de référence V2, alors l'unité de commande électronique 31 établit une consigne de fermeture de l'électrovanne d'entrée 15 et d'ouverture de l'électrovanne de sortie 16 E222. Si le volume d'huile mesuré est supérieur ou égal à un volume de référence V2, l'unité de commande électronique 31 établit une consigne d'ouverture de l'électrovanne d'entrée 15 et d'ouverture de l'électrovanne de sortie 16 E223. Cette régulation est appliquée tant que le moteur est allumé.

Lorsque l'électrovanne d'entrée 15 et l'électrovanne de sortie 16 sont passantes, le réservoir auxiliaire 2 se remplit car l'ajutage d'entrée 17 a une section plus importante que l'ajutage de sortie 18. Lorsque l'électrovanne d'entrée 15 est non passante et l'électrovanne de sortie 16 est passante, le réservoir auxiliaire 2 se vide dans le carter d'huile 1. En pilotant de la sorte l'ouverture ou la fermeture de l'électrovanne d'entrée 15 en fonction du niveau d'huile dans le carter d'huile 1, on obtient une régulation de la quantité d'huile dans le réservoir auxiliaire 2. Selon le principe des vases communicants, on obtient une régulation du niveau d'huile dans le carter d'huile 1. Cette régulation peut faire l'objet d'un filtrage pour éviter une activation trop fréquente des électrovannes. Ainsi, le moteur fonctionne avec une quantité maitrisée d'huile dans le carter d'huile 1 quelque soit les conditions de température ou quelque soit la quantité totale d'huile contenue dans le dispositif de lubrification 30. Une quantité d'huile trop importante dans le carter d'huile 1 crée un risque de ré-aspiration, de barbotage ou un risque de perte de charge lié à un barbotement du vilebrequin. La régulation mise en œuvre selon l'invention permet d'augmenter la quantité totale d'huile dans le dispositif de lubrification 30 sans les risques mentionnés.

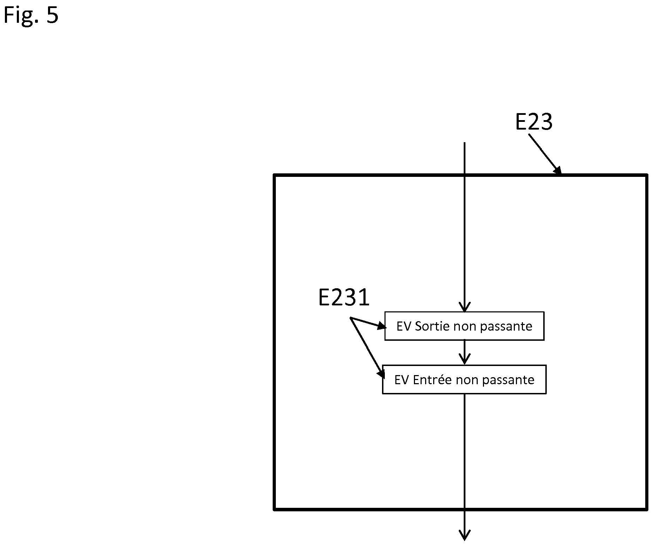

La figure 5 illustre le fonctionnement de sous-étape de gestion des arrêts automatiques du moteur E23. En situation de conduite, lorsque le moteur s'arrête automatiquement, la sous-étape de gestion des arrêts automatiques du moteur E23 est activée. Un arrêt automatique du moteur peut survenir par exemple lorsque le véhicule s'immobilise. Lorsque la sous-étape de gestion des arrêts automatiques du moteur est activée, l'unité de commande électronique 31 établit alors une consigne E231 de fermeture des électrovannes d'entrée 15 et de sortie 16. Cette consigne est applicable jusqu'au redémarrage automatique du moteur.

Lorsque l'électrovanne d'entrée 15 est fermée, la pression d'huile dans les organes du moteur 3 est maintenue ou tout au moins décroit lentement car l'huile retourne dans le carter d'huile en passant par des conduites de recyclages 104 en aval des organes moteur. La fermeture de l'électrovanne d'entrée 15 empêche la pression de chuter plus rapidement par dissipation dans le réservoir auxiliaire 2. Par conséquent, elle améliore la lubrification lors du redémarrage du moteur. L'électrovanne de sortie 16 est non passante afin de limiter l'augmentation du volume d'huile dans le carter d'huile 1. Ainsi, il n'y a pas de risque de ré-aspiration et/ou d'aération de l'huile dans le carter d'huile 1 ou de perte de charge à cause du barbotage du vilebrequin lors du redémarrage du moteur.

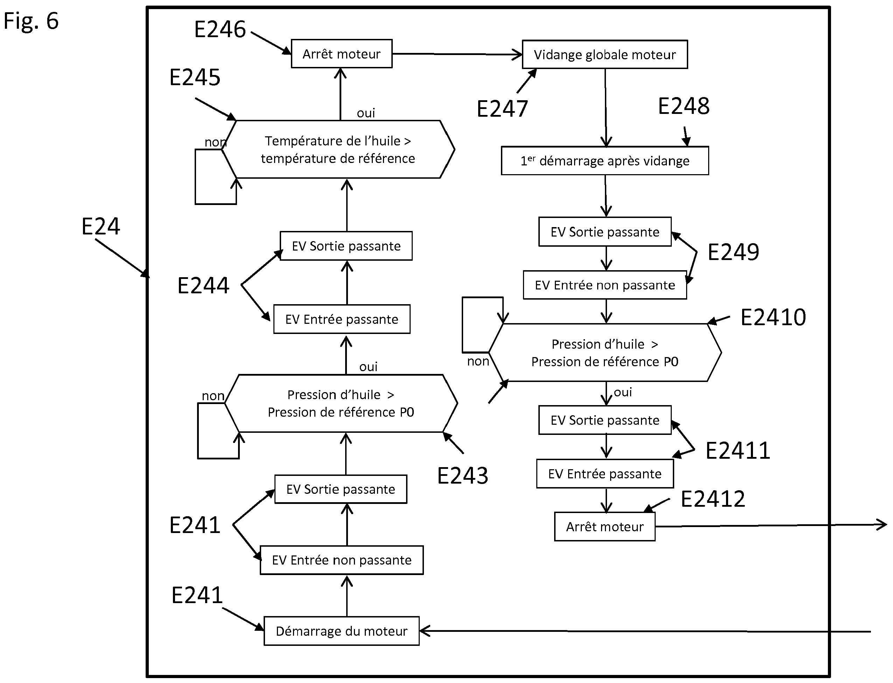

La figure 6 illustre le fonctionnement de la sous-étape de gestion d'une opération de maintenance E24. La sous-étape de gestion d'une opération de maintenance E24 est destinée à réaliser des opérations de maintenance. Ces opérations de maintenance peuvent être par exemple le remplissage initial du dispositif de lubrification en huile lors de la fabrication du groupe motopropulseur 32 ou bien une procédure de vidange d'huile. La quatrième sous-étape de calcul est initiée lorsque le moteur est à l'arrêt et que l'unité de commande électronique 31 reçoit une demande de maintenance.

Selon le mode de réalisation de l'invention présenté, la sous-étape de gestion d'une opération de maintenance a pour objet une procédure de vidange d'huile. Une vidange d'huile consiste à purger le dispositif de lubrification de son huile usagée et de le remplir avec de l'huile neuve. A cet effet, la sous-étape de gestion d'une opération de maintenance E24 comprend un arrêt du moteur lors duquel l'huile est remplacée.

Plus précisément, la sous-étape de gestion d'une opération de maintenance E24 débute par une mise sous pression du circuit d'huile. Lors de la mise sous pression du circuit d'huile, le moteur est démarré automatiquement ou manuellement E241. Un démarrage automatique est obtenu si l'unité de commande électronique émet une consigne de démarrage du moteur. Un démarrage manuel est obtenu si un opérateur met le contact sur le véhicule. Ensuite, l'unité de commande électronique 31 établit une consigne de fermeture de l'électrovanne d'entrée 15 et d'ouverture de l'électrovanne de sortie 16 E242. L'unité de commande électronique compare la pression d'huile du circuit haute pression à une pression de référence P0 E243. La consigne E242 est active tant que la pression d'huile dans le circuit haute pression 101 est inférieure ou égale à une pression de référence P0. La fermeture de l'électrovanne d'entrée 15 permet d'éviter qu'une partie de la pression générée par la pompe à huile 4 soit dissipée dans le réservoir auxiliaire 2. Ainsi, lors du démarrage du moteur, la totalité de l'huile pompée par la pompe à huile 4 est dirigée vers les organes du moteur 3 à lubrifier.

Lorsque la pression d'huile devient strictement supérieure à la pression de référence P0, l'unité de commande électronique 31 établit une consigne d'ouverture de l'électrovanne d'entrée 15 et d'ouverture de l'électrovanne de sortie 16 E244. L'ouverture de l'électrovanne d'entrée 15 permet d'éviter une surpression d'huile dans le carter d'huile 1. L'ouverture de l'électrovanne de sortie 16 permet de mettre la totalité de l'huile en circulation dans le dispositif de lubrification 30. Ainsi la totalité de l'huile est chauffée par le moteur. La température de l'huile augmente progressivement jusqu'à la température de fonctionnement du moteur. L'unité de commande électronique compare la température de l"huile à une température de référence T0 E245. Lorsque la température de l'huile devient strictement supérieure à une valeur de référence T0, le moteur est arrêté E246. L'arrêt du moteur peut être automatique ou manuel. Un arrêt automatique est obtenu si le procédé de gestion émet une consigne d'arrêt du moteur. Un arrêt manuel est obtenu si un opérateur coupe le contact sur le véhicule.

Dès lors, un opérateur peut procéder à la purge du dispositif de lubrification de son huile usagée E247. Les électrovannes d'entrée 15 et de sortie 16 étant ouvertes, la totalité de l'huile contenue dans le dispositif de lubrification 30 peut s'écouler dans le carter d'huile 1 puis en dehors du dispositif de lubrification 30 par un orifice disposé dans la partie inférieure du carter d'huile 1. La chauffe préalable de l'huile abaisse la viscosité de l'huile. L'huile s'écoule facilement à travers le réservoir auxiliaire 2, les différentes conduites hydrauliques et le carter d'huile 1. Lorsque le dispositif de lubrification est complètement purgé, un opérateur peut reboucher l'orifice de vidange du carter d'huile 1 et remplir le dispositif de lubrification 30 avec de l'huile neuve. Il est possible de remplir le dispositif de lubrification en versant l'huile directement dans le carter d'huile 1 ou dans le réservoir auxiliaire 2. Dans le cas ou l'huile est versée dans le réservoir auxiliaire 2, l'huile s'écoule dans le carter d'huile 1 en passant par l'électrovanne de sortie 16 qui est passante et la conduite de raccordement 102.

Après le remplissage avec de l'huile neuve, le moteur est démarré automatiquement ou manuellement E248. L'unité de commande électronique 31 établit une consigne de fermeture de l'électrovanne d'entrée 15 et d'ouverture de l'électrovanne de sortie 16 E249. L'unité de commande électronique compare la pression d'huile du circuit haute pression 101 à une pression de référence P0 E2410. La consigne E249 est maintenue tant que la pression d'huile dans le circuit haute pression 101 est inférieure ou égale à une pression de référence P0. La fermeture de l'électrovanne d'entrée 15 permet d'éviter qu'une partie de la pression générée par la pompe à huile 4 soit dissipée dans le réservoir auxiliaire 2. Ainsi, lors du démarrage du moteur, la totalité de l'huile pompée par la pompe à huile 4 est dirigée vers les organes moteurs à lubrifier 3.

Dès que la pression d'huile dans le circuit haute pression 101 est strictement supérieure à une pression de référence P0, l'unité de commande électronique 31 établit une consigne d'ouverture de l'électrovanne d'entrée 15 et d'ouverture de l'électrovanne de sortie 16 E2411. Ainsi, le volume d'huile dans le réservoir auxiliaire 2 augmente, le volume d'huile dans le carter d'huile 1 diminue. Ainsi le moteur fonctionne sans risque de ré-aspiration et/ou d'aération de l'huile et sans risque de perte de charge lié à un barbotement du vilebrequin. Les organes moteurs 3 sont alors lubrifiés avec de l'huile neuve. Ensuite le moteur est arrêté automatiquement ou manuellement E2412 et la sous-étape de maintenance est terminée.

Enfin, le procédé de gestion comprend une étape d'actionnement E3 de l'électrovanne d'entrée 15 et/ou de sortie 16. L'étape d'actionnement E3 transforme la ou les consignes calculées lors de l'étape de calcul E2 en une commande électrique apte à actionner la ou les électrovannes.

Grâce à l'invention le carter d'huile 1 fonctionne en toute situation avec un volume d'huile optimal. Les organes moteurs 3 sont efficacement lubrifiés dès le démarrage du moteur. L'huile est rapidement réchauffée lors du démarrage du moteur. La procédure de maintenance permet une vidange aisée de la totalité de l'huile contenue dans le dispositif de lubrification 30.

## Revendications

1. Procédé de gestion d'un dispositif de lubrification (30) d'un moteur comprenant un carter d'huile (1), un réservoir d'huile auxiliaire (2) muni d'une électrovanne d'entrée (15) et d'une électrovanne de sortie (16) et alimenté par un circuit d'huile haute pression (101), le procédé de gestion comprenant une étape d'acquisition (E1) d'au moins une caractéristique fonctionnelle du moteur, une étape de calcul (E2) d'au moins une consigne d'ouverture ou de fermeture d'au moins une électrovanne en fonction de l'au moins une caractéristique fonctionnelle du moteur et une étape d'actionnement (E3) de l'au moins une électrovanne en fonction de l'au moins une consigne, l'étape de calcul (E2) comprenant une sous-étape de régulation du volume d'huile (E22) dans le carter d'huile (1) consécutive à une étape d'acquisition et de vérification de l'état allumé du moteur et d'acquisition de la pression huile et de vérification que ladite pression est supérieure à un seuil de pression P0, et comprenant les consignes suivantes :
- Lorsque le niveau d'huile dans le carter d'huile est strictement inférieur à un niveau de référence V2, une consigne de fermeture de l'électrovanne d'entrée (15) et d'ouverture de l'électrovanne de sortie (16) est établie (E222);
- Lorsque le niveau d'huile dans le carter d'huile est supérieur ou égal au niveau de référence V2, une consigne d'ouverture de l'électrovanne d'entrée (15) et d'ouverture de l'électrovanne de sortie (16) est établie (E223).

2. Procédé de gestion selon la des revendication précédente, **caractérisé en ce que** l'étape d'acquisition (E1) comprend une première sous-étape de détermination de grandeurs physiques (E11) du dispositif de lubrification, dont le niveau d'huile dans le carter d'huile (1) du moteur et la température de l'huile et la pression de l'huile dans le circuit d'huile haute pression (101) et une deuxième sous-étape de détection de l'état du moteur (E12), notamment la détection du démarrage ou de l'arrêt du moteur ou de l'arrêt automatique du moteur en situation de conduite.

3. Procédé de gestion selon l'une des revendications précédentes, **caractérisé en ce que** l'étape de calcul (E2) comprend une sous-étape de sélection de calculs (E25) comprenant une comparaison du niveau d'huile par rapport à un niveau de référence et une comparaison de la température de l'huile par rapport à une température de référence et une comparaison de la pression d'huile par rapport à une pression de référence et une détection de l'état du moteur.

4. Procédé de gestion selon l'une des revendications précédentes, **caractérisé en ce que** l'étape de calcul (E2) comprend une sous-étape de gestion du démarrage du moteur (E21) comprenant les consignes suivantes :
- Lorsque le niveau d'huile dans le carter d'huile (1) est strictement inférieur à un niveau de référence V1, une consigne de fermeture de l'électrovanne d'entrée (15) et d'ouverture de l'électrovanne de sortie (16) est établie (E213);
- Lorsque le niveau d'huile dans le carter d'huile (1) est supérieur ou égal au niveau de référence V1, une consigne de fermeture de l'électrovanne d'entrée (15) et de fermeture de l'électrovanne de sortie (16) est établie (E212).

5. Procédé de gestion selon l'une des revendications précédentes, **caractérisé en ce que** l'étape de calcul (E2) comprend une sous-étape de gestion des arrêts automatiques du moteur (E23) comprenant une consigne de fermeture de l'électrovanne d'entrée (15) et de fermeture de l'électrovanne de sortie (16) (E231).

6. Procédé de gestion selon l'une des revendications précédentes, **caractérisé en ce que** l'étape d'acquisition (E1) comprend une détection d'une demande de maintenance (E13), notamment une demande de vidange d'huile.

7. Procédé de gestion selon la revendication précédente, **caractérisé en ce que** l'étape de calcul (E2) comprend une sous-étape de gestion d'une opération de maintenance (E24) comprenant un arrêt du moteur destiné à permettre à un opérateur de remplacer l'huile de lubrification.

8. Procédé de gestion selon l'une des revendications précédentes, **caractérisé en ce que** l'étape d'acquisition (E1) comprend une sous étape (E14) de détermination du niveau d'huile dans le carter d'huile incluant une temporisation (35) dont la durée est sensiblement égale au temps nécessaire pour que l'huile contenue dans le réservoir auxiliaire (2) se vide dans le carter d'huile (1) lorsque l'électrovanne d'entrée (15) est non passante et l'électrovanne de sortie est passante (16).

9. Groupe motopropulseur (32) pour véhicule automobile, comprenant un dispositif de lubrification (30) pour moteur muni d'un réservoir d'huile auxiliaire (2) alimenté par un circuit d'huile haute pression (101), **caractérisé en ce qu'**il comprend une unité de commande électronique (31) qui met en œuvre le procédé de gestion du dispositif de lubrification selon l'une des revendications précédentes.

10. Véhicule automobile, **caractérisé en ce qu'**il comprend un groupe motopropulseur (32) selon la revendication précédente.

## Patentansprüche

1. Verfahren zur Verwaltung einer Schmiervorrichtung (30) eines Motors, die eine Ölwanne (1) und einen Hilfsölbehälter (2) enthält, der mit einem Eingangs-Elektroventil (15) und mit einem Ausgangs-Elektroventil (16) versehen ist und von einem Hochdruck-Ölkreislauf (101) versorgt wird, wobei das Verwaltungsverfahren einen Erfassungsschritt (E1) mindestens eines Funktionsmerkmals des Motors, einen Berechnungsschritt (E2) mindestens eines Sollwerts zum Öffnen oder Schließen mindestens eines Elektroventils abhängig vom mindestens einen Funktionsmerkmal des Motors und einen Betätigungsschritt (E3) des mindestens einen Elektroventils abhängig vom mindestens einen Sollwert enthält, wobei der Berechnungsschritt (E2) einen Teilschritt der Regelung des Ölvolumens (E22) in der Ölwanne (1) nach einem Schritt der Erfassung und Überprüfung des gezündeten Zustands des Motors und der Erfassung des Öldrucks und der Überprüfung enthält, dass der Druck höher als eine Druckschwelle P0 ist, und das die folgenden Sollwerte enthält:
- wenn der Ölstand in der Ölwanne strikt niedriger als ein Bezugsstand V2 ist, wird ein Sollwert des Schließens des Eingangs-Elektroventils (15) und des Öffnens des Ausgangs-Elektroventils (16) erstellt (E222);
- wenn der Ölstand in der Ölwanne höher als der oder gleich dem Bezugsstand V2 ist, wird ein Sollwert des Öffnens des Eingangs-Elektroventils (15) und des Öffnens des Ausgangs-Elektroventils (16) erstellt (E223).

2. Verwaltungsverfahren nach dem vorhergehenden Anspruch, **dadurch gekennzeichnet, dass** der Erfassungsschritt (E1) einen ersten Teilschritt der Bestimmung physikalischer Größen (E11) der Schmiervorrichtung, darunter der Ölstand in der Ölwanne (1) des Motors und die Temperatur des Öls und der Druck des Öls im Hochdruck-Ölkreislauf (101), und einen zweiten Teilschritt der Erfassung des Zustands des Motors (E12) enthält, insbesondere die Erfassung des Anlassens oder Abstellens des Motors oder des automatischen Abstellens des Motors in einer Fahrsituation.

3. Verwaltungsverfahren nach einem der vorhergehenden Ansprüche, **dadurch gekennzeichnet, dass** der Berechnungsschritt (E2) einen Teilschritt der Auswahl von Berechnungen (E25) enthält, die einen Vergleich des Ölstands mit einem Bezugsstand und einen Vergleich der Temperatur des Öls mit einer Bezugstemperatur und einen Vergleich des Öldrucks mit einem Bezugsdruck und eine Erfassung des Zustands des Motors enthalten.

4. Verwaltungsverfahren nach einem der vorhergehenden Ansprüche, **dadurch gekennzeichnet, dass** der Berechnungsschritt (E2) einen Teilschritt der Verwaltung des Anlassens des Motors (E21) enthält, der die folgenden Sollwerte enthält:
- wenn der Ölstand in der Ölwanne (1) strikt niedriger als ein Bezugsstand V1 ist, wird ein Sollwert des Schließens des Eingangs-Elektroventils (15) und des Öffnens des Ausgangs-Elektroventils (16) erstellt (E213);
- wenn der Ölstand in der Ölwanne (1) höher als der oder gleich dem Bezugsstand V1 ist, wird ein Sollwert des Schließens des Eingangs-Elektroventils (15) und des Schließens des Ausgangs-Elektroventils (16) erstellt (E212).

5. Verwaltungsverfahren nach einem der vorhergehenden Ansprüche, **dadurch gekennzeichnet, dass** der Berechnungsschritt (E2) einen Teilschritt der Verwaltung des automatischen Abstellens des Motors (E23) enthält, der einen Sollwert des Schließens des Eingangs-Elektroventils (15) und des Schließens des Ausgangs-Elektroventils (16) enthält (E231).

6. Verwaltungsverfahren nach einem der vorhergehenden Ansprüche, **dadurch gekennzeichnet, dass** der Erfassungsschritt (E1) eine Erkennung einer Wartungsanforderung (E13) enthält, insbesondere eine Forderung eines Ölwechsels.

7. Verwaltungsverfahren nach dem vorhergehenden Anspruch, **dadurch gekennzeichnet, dass** der Berechnungsschritt (E2) einen Teilschritt der Verwaltung eines Wartungsvorgangs (E24) enthält, der ein Abstellen des Motors enthält, das dazu bestimmt ist, einem Bediener zu erlauben, das Schmieröl auszutauschen.

8. Verwaltungsverfahren nach einem der vorhergehenden Ansprüche, **dadurch gekennzeichnet, dass** der Erfassungsschritt (E1) einen Teilschritt (E14) der Bestimmung des Ölstands in der Ölwanne enthält, der eine Verzögerung (35) umfasst, deren Dauer im Wesentlichen gleich der Zeit ist, die notwendig ist, damit das im Hilfsbehälter (2) enthaltene Öl sich in die Ölwanne (1) entleert, wenn das Eingangs-Elektroventil (15) nicht durchlässig und das Ausgangs-Elektroventil durchlässig ist (16).

9. Antriebseinheit (32) für ein Kraftfahrzeug, die eine Schmiervorrichtung (30) für einen Motor enthält, die mit einem von einem Hochdruck-Ölkreislauf (101) versorgten Hilfsölbehälter (2) versehen ist, **dadurch gekennzeichnet, dass** sie eine elektronische Steuereinheit (31) enthält, die das Verwaltungsverfahren der Schmiervorrichtung nach einem der vorhergehenden Ansprüche anwendet.

10. Kraftfahrzeug, **dadurch gekennzeichnet, dass** es eine Antriebseinheit (32) nach dem vorhergehenden Anspruch enthält.

## Claims

1. Method for managing a device (30) for lubricating an engine, comprising an oil sump (1), an auxiliary oil reservoir (2) provided with an inlet solenoid valve (15) and an outlet solenoid valve (16) and supplied by a high-pressure oil circuit (101), the management method comprising a step (E1) of acquiring at least one functional characteristic of the engine, a step (E2) of calculating at least one setpoint for opening or closure of at least one solenoid valve depending on at least one functional characteristic of the engine and a step (E3) of actuating the at least one solenoid valve depending on the at least one setpoint, the calculation step (E2) comprising a sub-step (E22) of regulating the volume of oil in the oil sump (1) following a step of acquiring and verifying the ignited state of the engine and of acquiring the oil pressure and of verifying that said pressure is greater than a pressure threshold P0, and comprising the following setpoints:
- when the level of oil in the oil sump is strictly lower than a reference level V2, a setpoint (E222) for closure of the inlet solenoid valve (15) and opening of the outlet solenoid valve (16) is established;
- when the level of oil in the oil sump is higher than or equal to the reference level V2, a setpoint (E223) for opening of the inlet solenoid valve (15) and opening of the outlet solenoid valve (16) is established.

2. Management method according to the preceding claim, **characterized in that** the acquisition step (E1) comprises a first sub-step (E11) of determining physical parameters of the lubrication device, including the level of oil in the oil sump (1) of the engine and the temperature of the oil and the pressure of the oil in the high-pressure oil circuit (101), and a second sub-step (E12) of detecting the state of the engine, in particular detecting the starting or the stopping of the engine or the automatic stopping of the engine in a driving situation.

3. Management method according to either of the preceding claims, **characterized in that** the calculation step (E2) comprises a sub-step (E25) of selecting calculations comprising a comparison of the oil level with a reference level and a comparison of the temperature of the oil with a reference temperature and a comparison of the oil pressure with a reference pressure and a detection of the state of the engine.

4. Management method according to one of the preceding claims, **characterized in that** the calculation step (E2) comprises a sub-step (E21) of managing the starting of the engine, comprising the following setpoints:
- when the level of oil in the oil sump (1) is strictly lower than a reference level V1, a setpoint (E213) for closure of the inlet solenoid valve (15) and opening of the outlet solenoid valve (16) is established;
- when the level of oil in the oil sump (1) is higher than or equal to the reference level V1, a setpoint (E212) for closure of the inlet solenoid valve (15) and closure of the outlet solenoid valve (16) is established.

5. Management method according to one of the preceding claims, **characterized in that** the calculation step (E2) comprises a sub-step (E23) of managing the automatic stoppings of the engine, comprising a setpoint (E231) for closure of the inlet solenoid valve (15) and closure of the outlet solenoid valve (16) .

6. Management method according to one of the preceding claims, **characterized in that** the acquisition step (E1) comprises a detection (E13) of a maintenance request, in particular an oil draining request.

7. Management method according to the preceding claim, **characterized in that** the calculation step (E2) comprises a sub-step (E24) of managing a maintenance operation, comprising a stopping of the engine that is intended to allow an operator to replace the lubricating oil.

8. Management method according to one of the preceding claims, **characterized in that** the acquisition step (E1) comprises a sub-step (E14) of determining the level of oil in the oil sump, including a timeout (35) of which the duration is substantially equal to the time required for the oil contained in the auxiliary reservoir (2) to empty into the oil sump (1) when the inlet solenoid valve (15) is closed and the outlet solenoid valve (16) is open.

9. Powertrain (32) for a motor vehicle, comprising a lubrication device (30) for an engine, provided with an auxiliary oil reservoir (2) supplied by a high-pressure oil circuit (101), **characterized in that** it comprises an electronic control unit (31) that implements the method for managing the lubrication device according to one of the preceding claims.

10. Motor vehicle, **characterized in that** it comprises a powertrain (32) according to the preceding claim.
